(19) Europäisches Patentamt
European Patent Office
Office européen des brevets

(11) Veröffentlichungsnummer: **0 170 047**
**B1**

(12) **EUROPÄISCHE PATENTSCHRIFT**

(45) Veröffentlichungstag der Patentschrift: **10.08.88**

(51) Int. Cl.⁴: **C 07 F 7/08**

(21) Anmeldenummer: **85107868.3**

(22) Anmeldetag: **25.06.85**

(54) **Verfahren zur Herstellung von Milchsäuresilylestern.**

(30) Priorität: **07.07.84 DE 3425138**
**27.02.85 DE 3506839**
**18.05.85 DE 3517947**

(43) Veröffentlichungstag der Anmeldung: **05.02.86 Patentblatt 86/6**

(45) Bekanntmachung des Hinweises auf die Patenterteilung: **10.08.88 Patentblatt 88/32**

(84) Benannte Vertragsstaaten: **AT BE CH DE FR GB IT LI NL**

(56) Entgegenhaltungen:
**EP-A-0 095 115**
**EP-A-0 096 354**

**Kirk-Othmer,"Encyclopedia of Chemical Technology",3. Auflage, Band 13, Seiten 83,84,89**
**E.L. Eliel, "Stereochemie der Kohlenstoffverbindungen" (1966), Seiten 41-43**

(73) Patentinhaber: **BAYER AG, Konzernverwaltung RP Patentabteilung, D-5090 Leverkusen 1 Bayerwerk (DE)**

(72) Erfinder: **Gallenkamp, Bernd, Dr., Claudiusweg 5, D-5600 Wuppertal 1 (DE)**
Erfinder: **Krall, Hermann Dieter, Dr., Irmgardstrasse 8, D-4000 Düsseldorf 1 (DE)**

**EP 0 170 047 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein neues Verfahren zur Herstellung neuer Milchsäuresilylester und deren Verwendung als Zwischenprodukte zur Synthese von Stoffen mit herbizider Wirksamkeit.

Es ist bereits bekannt, daß sich 2-Tosyloxypropionsäure-(silyl-methyl)-ester als Zwischenprodukte zur Synthese von Verbindungen mit herbizider Wirksamkeit einsetzen lassen (vgl. EP-OS-0 096 354, DE-OS-3 319 289 und EP-OS-0 095 115). Weiterhin ist bekannt, daß man 2-Tosyloxy-propionsäure-(silyl-methyl)-ester erhält, wenn man 2-Tosyloxypropionsaurehalogenide mit Hydroxymethylsilyl-Derivaten umsetzt. Nachteilig an diesem Verfahren ist jedoch, daß die als Ausgangsstoffe benötigten Verbindungen jeweils in zweistufiger Reaktion hergestellt werden müssen. Bezogen auf die eingesetzten Startkomponenten werden die als Zwischenprodukte benötigten 2-Tosyloxypropionsäure-(silyl-methyl)-ester in einer für praktische Zwecke relativ niedrigen Ausbeute erhalten.

Es wurde nun gefunden, daß sich die neuen Milchsäuresilylester der Formel

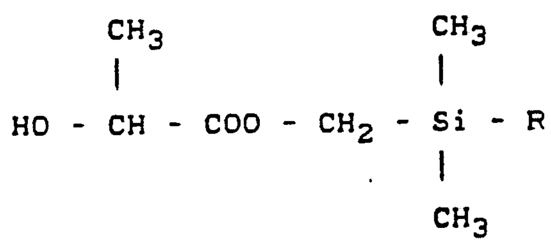

(I)

in welcher
R für Alkyl oder Aryl steht,

nach einem neuen Verfahren herstellen lassen, indem man Milchsäure der Formel

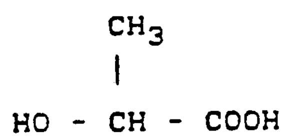

(II)

mit Chlormethylsilanen der Formel

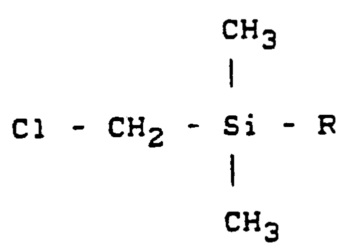

(III)

in welcher
R die oben angegebene Bedeutung hat,

in Gegenwart eines tertiären Amins sowie gegebenenfalls in Gegenwart eines zusätzlichen Verdünnungsmittels bei Temperaturen zwischen 50 und 120°C umsetzt.

Weiterhin wurde gefunden, daß die erfindungsgemäßen Milchsäuresilylester der Formel (I) sehr gut als Zwischenprodukte zur Synthese von Stoffen mit herbizider Wirksamkeit verwendbar sind.

Es ist als äußerst überraschend zu bezeichnen, daß sich Milchsäuresilylester der Formel (I) nach dem erfindungsgemäßen Verfahren in ausgezeichneter Reinheit und sehr hoher Ausbeute herstellen lassen. Vor allen Dingen konnte aufgrund des bekannten Standes der Technik nicht erwartet werden, daß die Umsetzung nicht an der Hydroxy-Gruppe, sondern mit hoher Selektivität an der Carboxylgruppe der Milchsäure erfolgt.

Das erfindungsgemäße Verfahren weist eine Reihe von Vorteilen auf. So sind die Reaktionskomponenten auch in großeren Mengen zugänglich und auch im technischen Maßstab problemlos zu handhaben. Ferner ist der zur Durchführung des Verfahrens erforderliche apparative Aufwand gering, und die Aufarbeitung des nach beendeter Umsetzung anfallenden Reaktionsgemisches bereitet keine Schwierigkeiten. Weiterhin werden einfache Säurebindemittel und, wenn überhaupt, dann auch nur übliche Verdünnungsmittel benötigt. Insbesondere jedoch lassen sich die Milchsäuresilylester der Formel (I) nach dem erfindungsgemäßen Verfahren nicht nur in sehr hoher Ausbeute, sondern auch frei von störenden Nebenprodukten herstellen. Im übrigen werden durch die erfindungsgemäße. Herstellung von Milchsäuresilylestern der Formel (I) Produkte

zur Verfügung gestellt, aus denen sich die zur Synthese von Herbiziden als Zwischenprodukte wichtigen 2-Tosyloxypropionsäure-(silyl-methyl)-ester in einfacherer Weise herstellen lassen als nach den vorbekannten Verfahren.

Verwendet man das S-Enantiomere der Milchsäure und Chlormethyltrimethylsilan als Ausgangsstoffe und N,N-Dimethylcyclohexylamin als tertiäres Amin, so kann der Verlauf des erfindungsgemäßen Verfahrens durch das folgende Formelschema wiedergegeben werden.

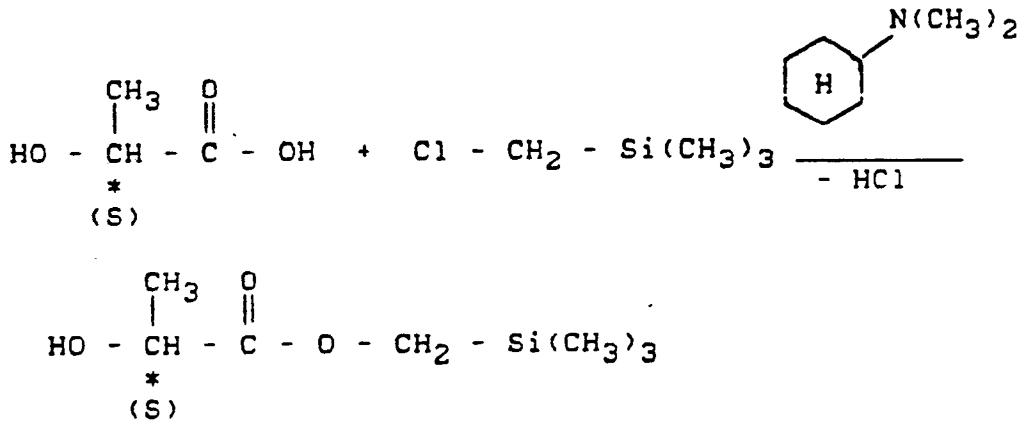


In den obigen Formeln und auch im folgenden Teil der Beschreibung ist das asymmetrisch substituierte Kohlenstoffatom jeweils dann durch ein (*) markiert, wenn es sich um optisch aktive Verbindungen handelt. Die Angabe "S" oder "R" bezeichnet die absolute Konfiguration am asymmetrisch substituierten Kohlenstoffatom.

Die bei dem erfindungsgemäßen Verfahren als Ausgangsstoff benötigte Milchsäure ist durch die Formel (II) eindeutig definiert. Es kann sowohl racemische Milchsäure als auch optisch aktive Milchsäure verwendet werden. Besonders bevorzugt ist der Einsatz des S-Enantiomeren der Milchsäure. Die racemische Milchsäure und auch die beiden optisch aktiven Formen der Milchsäure sind bekannt.

Die bei dem erfindungsgemäßen Verfahren weiterhin als Ausgangsstoffe benötigten Chlormethylsilane sind durch die Formel (III) definiert. In dieser Formel steht R vorzugsweise für Alkyl mit 1 bis 4 oder mit 12 Kohlenstoffatomen sowie für Phenyl.

Als Beispiele für Chlormethylsilane der Formel (III) seien genannt;

Chlormethyltrimethylsilan
Chlormethyl-dimethyl-ethyl-silan
Chlormethyl-dimethyl-n-propyl-silan
Chlormethyl-dimethyl-n-butyl-silan
Chlormethyl-dimethyl-n-dodecyl-silan
Chlormethyl-dimethyl-phenyl-silan

Die Chlormethylsilane der Formel (III) sind in der organischen Chemie bekannte Synthesebausteine.

Als tertiäre Amine, die bei dem erfindungsgemäßen Verfahren als Säurebindemittel fungieren, können alle üblichen aliphatischen, aromatischen und heterocyclischen tertiären Amine eingesetzt werden. Vorzugsweise in Frage kommen Triethyl-amin, Tri-n-butyl-amin, Benzyl-dimethylamin, N,N-Dimethyl-cyclohexyl-amin, Methyl-dicyclohexyl-amin, Pyridin, α-Picolin, β-Picolin, γ-Picolin, Methyl-dibenzyl-amin, 1,5-Diazo-bicyclo-[4.3.0]-non-5-en und 1,8-Diaza-bicyclo-[5.4.0]-undec-7-en. Ganz besonders bevorzugt ist N,N-Dimethyl-cyclohexyl-amin.

Als Verdünnungsmittel können bei dem erfindungsgemäßen Verfahren alle üblichen inerten organischen Solventien eingesetzt werden. Vorzugsweise in Betracht kommen aromatische Kohlenwasserstoffe, wie Toluol und Xylol, ferner Ketone, wie Aceton und Methyl-isobutyl-keton, und außerdem Nitrile, wie Acetonitril. Es ist jedoch auch möglich, in Abwesenheit von zusätzlichen organischen Solventien zu arbeiten, wenn man die Silylverbindung in einem ausreichenden Überschuß einsetzt.

Die Reaktionstemperaturen können bei dem erfindungsgemäßen Verfahren innerhalb eines bestimmten Bereiches variiert werden. Im allgemeinen arbeitet man bei Temperaturen zwischen 60°C und 110°C.

Das erfindungsgemäße Verfahren wird im allgemeinen unter Normaldruck durchgeführt. Es ist jedoch auch möglich, unter erhöhtem oder vermindertem Druck zu arbeiten.

Bei der Durchführung des erfindungsgemäßen Verfahrens setzt man auf 1 Mol an Milchsäure der Formel (II) im allgemeinen 1 bis 4 Mol, vorzugsweise 1,5 bis 3 Mol an Chlormethylsilan der Formel (III) sowie 1 bis 3 Mol, vorzugsweise 1,1 bis 2 Mol an tertiärem Amin ein. Im allgemeinen geht man so vor, daß man die Reaktionskomponenten der Formeln (II) und (III), gegebenenfalls in einem organischen Lösungsmittel, vorlegt und danach das tertiäre Amin zugibt. Es ist jedoch auch möglich, die Komponenten in anderer Reihenfolge zusammenzubringen. Danach wird das Reaktionsgemisch 10 bis 15 Stunden auf die jeweils gewünschte Temperatur erhitzt. Die anschließende Aufarbeitung erfolgt nach üblichen Methoden. Im allgemeinen geht man

so vor, daß man das abgekühlte Reaktionsgemisch in verdünnte wäßrige Säure gibt, die Phasen trennt, die organische Phase mehrfach mit Wasser wäscht und dann einer fraktionierten Destillation unter vermindertem Druck unterwirft. Überschüssiges Chlormethylsilan wird dabei in reiner Form zurückgewonnen, so daß es für weitere Umsetzungen verwendbar ist. Die erfindungsgemäß herstellbaren Milchsäuresilylester fallen in Form von farblosen Substanzen an; eine zusätzliche Reinigung ist im allgemeinen nicht erforderlich.

Setzt man bei der Durchführung des erfindungsgemäßen Verfahrens optisch aktive Milchsäure als Ausgangssubstanz ein, so erhält man optisch aktiven Milchsäuresilylester. Am asymmetrisch substituierten Kohlenstoffatom bleibt die Konfiguration während der Umsetzung erhalten. Demgemäß entsteht beim Einsatz des S-Enantiomeren der Milchsäure das entsprechende S-Enantiomere des jeweiligen Milchsäuresilylesters.

Die Milchsäuresilylester der Formel (I) sind neu. Bevorzugt sind diejenigen Verbindungen der Formel (I), in denen R für Alkyl mit 1 bis 4 Kohlenstoffatomen oder mit 12 Kohlenstoffatomen oder für Phenyl steht. Ganz besonders bevorzugt sind die S-Enantiomeren der Milchsäuresilylester der Formel

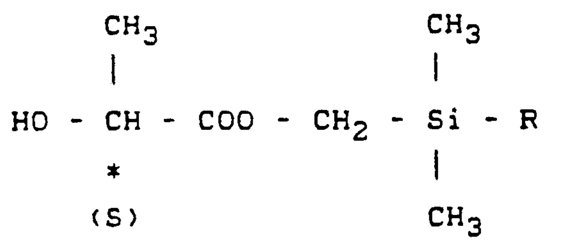

(Ia)

in welcher
R diejenigen Bedeutungen hat, die für diesen Rest bereits vorzugsweise genannt wurden.

Die Milchsäuresilylester der Formel (I) sind wertvolle Zwischenprodukte zur Synthese von Stoffen mit herbiziden Eigenschaften. So lassen sich herbizid wirksame Phenoxypropionsäure-Derivate der Formel

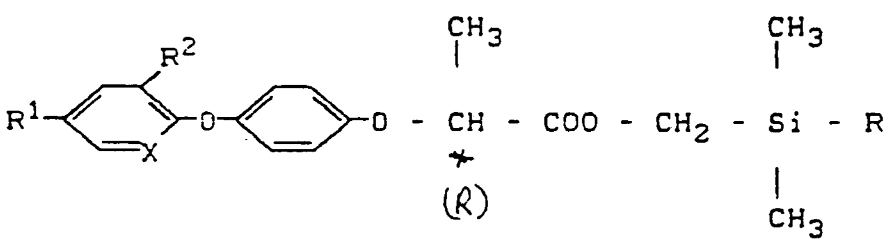

(IV)

in welcher
R für Alkyl mit 1 bis 4 oder 12 Kohlenstoffatomen oder für Phenyl steht,
$R^1$ für Chlor oder Trifluormethyl steht,
$R^2$ für Wasserstoff oder Chlor steht und
X für Stickstoff, eine CH-Gruppe oder eine C-Cl-Gruppe steht,

herstellen, indem man in einer ersten Stufe Milchsäuresilylester der Formel

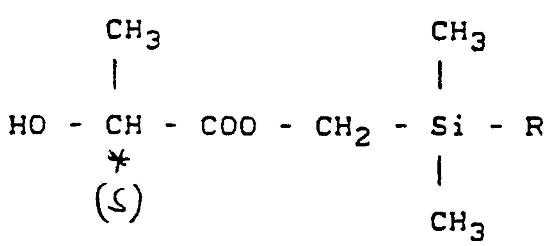

(I)

in welcher
R die oben angegebene Bedeutung hat,

mit Tosylchlorid in Gegenwart eines Säurebindemittels, wie z. B. Pyridin, und gegebenenfalls in Gegenwart eines zusätzlichen Verdünnungsmittels bei Temperaturen zwischen 0°C und 20°C umsetzt und in einer zweiten Stufe die dabei entstehenden 2-Tosyloxypropionsäure-(silylmethyl)-ester der Formel

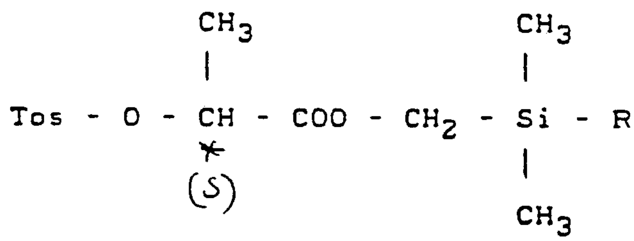

(V)

in welcher
R die oben angegebene Bedeutung hat und
Tos für Tosyl steht,
mit Phenol-Derivaten der Formel

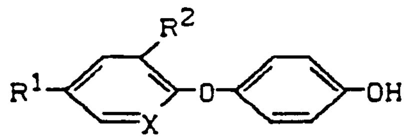

(VI)

in welcher
$R^1$, $R^2$ und X die oben angegebene Bedeutung haben,

in Gegenwart eines Säurebindemittels und in Gegenwart eines Verdünnungsmittels bei Temperaturen zwischen 50° C und 120° C umsetzt.

Verwendet man zum Beispiel das S-Enantiomere des Milchsäure-(trimethylsilyl)-methylesters und Tosylchlorid als Ausgangsstoffe und 4-(3,5-Dichlorpyridyl-2-oxy)-phenol als Reaktionskomponente, so kann der Verlauf des obigen Verfahrens durch das folgende Formelschema veranschaulicht werden:

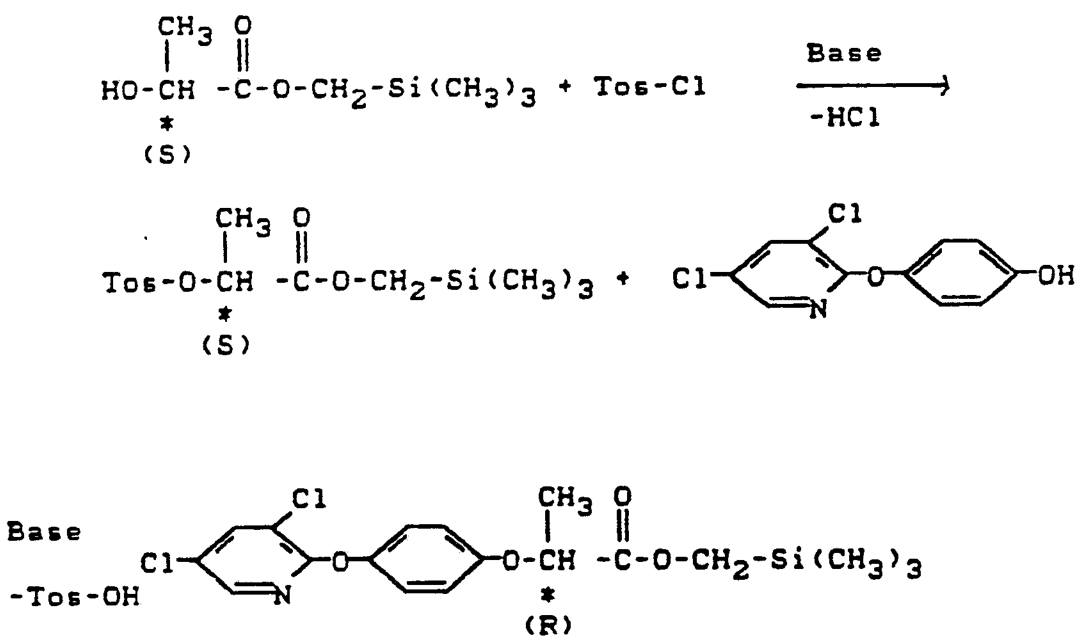


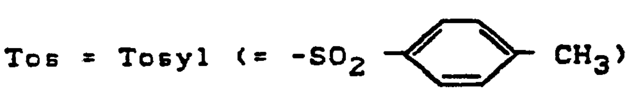


Die bei der Durchführung des oben erwähnten Verfahrens zur Herstellung von Phenoxypropionsäure-Derivaten der Formel (IV) als Reaktionskomponenten benötigten Phenol-Derivate der Formel (VI) sind bekannt (vgl. DE-PS-2 546 251).

Als Säurebindemittel können in der zweiten Stufe des oben erwähnten Verfahrens vorzugsweise

Kaliumcarbonat und Natriumcarbonat verwendet werden.

Als Verdünnungsmittel können in der zweiten Stufe des oben erwähnten Verfahrens vorzugsweise polare, inerte organische solventien verwendet werden. Besonders bevorzugt sind Ketone, wie Aceton und Methylisobutylketon, ferner Acetonitril und Dimethylformamid.

Die Reaktionstemperaturen können in der zweiten Stufe des oben erwähnten Verfahrens innerhalb eines bestimmten Bereichs variiert werden. Im allgemeinen arbeitet man bei Temperaturen zwischen 50°C und 120°C, vorzugsweise zwischen 60°C und 100°C.

Das oben erwähnte Verfahren zur Herstellung von Phenoxypropionsäure-Derivaten der Formel (IV) wird im allgemeinen sowohl in der ersten als auch in der zweiten Stufe unter Normaldruck durchgeführt. Es ist aber auch möglich, unter erhöhtem oder vermindertem Druck zu arbeiten.

Bei der Durchführung der zweiten Stufe des oben erwähnten Verfahrens zur Herstellung von Phenoxypropionsäure-Derivaten der Formel (IV) setzt man auf 1 Mol an Phenol-Derivat der Formel (VI) eine äquivalente Menge oder auch einen geringen Überschuß an 2-Tosyloxypropionsäure-(silyl-methyl)-ester der Formel (V) sowie 1,5 bis 2,5 Äquivalente Säurebindemittel und gegebenenfalls wasserfreies Calciumsulfat ein. Die Reaktionskomponenten werden in dem jeweiligen Lösungsmittel mehrere Stunden bei der jeweils erforderlichen Temperatur gerührt. Die Aufarbeitung erfolgt nach üblichen Methoden. Im allgemeinen geht man so vor, daß man das Reaktionsgemisch absaugt und einengt, den verbleibenden Rückstand in einem organischen Lösungsmittel aufnimmt, die entstehende organische Phase nacheinander mit verdünnter wäßriger Alkalilauge und Wasser wäscht, dann trocknet und einengt. Der verbleibende Rückstand wird durch kurzzeitiges Erhitzen im Hochvakuum ("Andestillieren") von noch enthaltenen Resten an flüchtigen Anteilen befreit.

Wenn nach dem oben erwähnten Verfahren das R-Enantiomere eines Phenoxypropionsäure-Derivates der Formel (IV) hergestellt werden soll, ist es erforderlich, das S-Enantiomere eines Milchsäuresilylesters der Formel (I) einzusetzen, da im Zuge der Reaktion (in der zweiten Stufe) eine Walden'sche Umkehr am asymmetrisch substituierten Kohlenstoffatom erfolgt. In analoger Weise müssen bei der Synthese von S-Enantiomeren von Phenoxypropionsäure-Derivaten der Formel (IV) die jeweiligen R-Enantiomeren der Milchsäuresilylester der Formel (I) verwendet werden.

Die Durchführung des erfindungsgemäßen Verfahrens und die Herstellung von Phenoxypropionsäure-Derivaten der Formel (IV) ausgehend von erfindungsgemäßen Milchsäuresilylestern der Formel (I) wird durch die folgenden Beispiele illustriert.

**Beispiel 1**

$$HO-\underset{(S)}{\underset{*}{\overset{\overset{CH_3}{|}}{CH}}}-\overset{\overset{O}{\|}}{C}-O-CH_2-Si(CH_3)_3 \qquad (I-1)$$

In ein Gemisch aus 48,9 g (≙ 0,5 Mol) des S-Enantiomeren der Milchsäure, 78,9 g 1,8-Diazobicyclo[5,4,0]undec-7-en und 300 ml Methyl-iso-butyl-keton werden unter Rühren bei 80 - 90°C 61,25 g (0,5 Mol) Chlormethyl-trimethylsilan zugetropft. Man rührt 16 Stunden bei 80 - 90°C nach, läßt dann abkühlen und wäscht das Reaktionsgemisch mit Wasser. Die organische Phase wird abgetrennt, getrocknet und unter vermindertem Druck eingeengt. Der verbleibende Rückstand wird durch kurzzeitiges Erhitzen auf 50°C (Badtemperatur) bei einem Druck von 20 mbar von Resten an flüchtigen Anteilen befreit und dann destilliert. Man erhält auf diese Weise 52 g eines Produktes (Kp = 80 - 82°C/15 mbar), das zu 94 % aus dem S-Enantiomeren des 2-Hydroxypropionsäure-(trimethylsilyl)-methylesters besteht. Die Ausbeute errechnet sich danach zu 55 % der Theorie.

**Beispiel 2**

$$HO-\underset{(S)}{\underset{*}{\overset{\overset{CH_3}{|}}{CH}}}-\overset{\overset{O}{\|}}{C}-O-CH_2-Si(CH_3)_3 \qquad (I-1)$$

In ein Gemisch aus 270 g (3 Mol) des S-Enantiomeren der Milchsäure und 736 g (6 Mol) Chlormethyltrimethylsilan werden unter Rühren bei Raumtemperatur innerhalb von einer Stunde 400 g (3,15 Mol) N,N-Dimethylcyclohexyl-amin ohne Außenkühlung eingetropft. Man erwärmt unter Rühren auf 95°C und beläßt 12 Stunden bei dieser Temperatur. Danach wird das Reaktionsgemisch auf Raumtemperatur abgekühlt und in 1,2 Liter 10 %-ige wäßrige Schwefelsäure gegossen. Die organische Phase wird abgetrennt, zweimal mit je 500 ml Wasser gewaschen und einer fraktionierten Destillation unter vermindertem Druck unterworfen. Dabei werden in einer ersten Fraktion (Kp = 50°C/200 mbar) 430 g Destillat aufgefangen, das aus 15 g einer wäßrigen Phase und 415 g (3,38 Mol) Chlormethyltrimethylsilan besteht. In einer zweiten Fraktion werden bei einem Siedepunkt von Kp = 40°C/0,1 mbar 371 g (2,10 Mol) des S-Enantiomeren des 2-Hydroxypropionsäure-(trimethylsilyl)-methylesters in einer Reinheit von 99,5 % aufgefangen. Die Ausbeute berechnet sich danach zu 85,1 % der Theorie, bezogen auf umgesetztes Chlormethyltrimethylsilan.

**Beispiel 3**

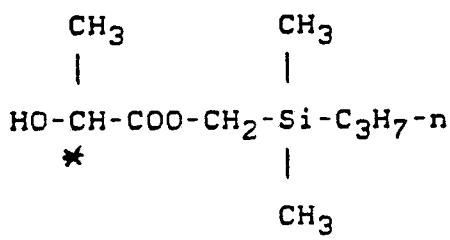

(I-3)

Zu 9,8 g (0,1 Mol) S-Enantiomerem der Milchsäure und 30 g Chlormethyl-dimethyl-n-propyl-silan läßt man bei Raumtemperatur unter Rühren 12,7 g N,N-Dimethylcyclohexyl-amin tropfen. Das Reaktionsgemisch wird 16 Stunden auf 100°C erhitzt. Nach dem Abkühlen auf Raumtemperatur versetzt man mit 50 ml Diethylether, saugt den anfallenden Niederschlag ab, engt das Filtrat unter vermindertem Druck ein und destilliert den verbleibenden Rückstand unter vermindertem Druck. Man erhält auf diese Weise 11,7 g (54,2 % der Theorie) an S-Enantiomerem des 2-Hydroxypropionsäure-(dimethyl-n-propyl-silyl)-methylesters in einer Reinheit von 90 %.
Kp = 105 - 108/14 Torr

**Beispiel 4**

Herstellung des R-Enantiomeren des 2-[4-(3,5-Dichlorpyridyl-2-oxy)-phenoxy]-propionsäure-(trimethylsilyl)-methyl-esters.

a) 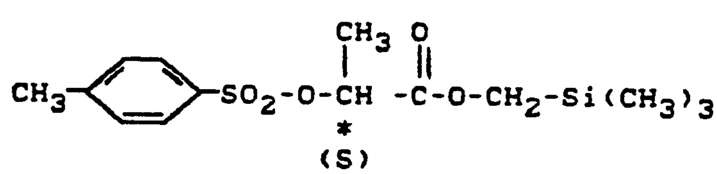 (V-1)

Zu einer Lösung von 916 g (4,8 Mol) Tosylchlorid in 800 g Pyridin gibt man bei 0°C 708 g (4 Mol) des S-Enantiomeren des 2-Hydroxypropionsäure-(trimethylsilyl)-methylesters und rührt dann 25 Stunden bei 0°C bis 5°C nach. Anschließend fügt man dem Reaktionsgemisch 100 g Wasser zu, rührt weitere 2 Stunden bei 5°C bis 10°C und erhält nach Zugabe von 1600 g Wasser und 2000 g Toluol nach Phasentrennung eine organische Phase, die man zweimal mit insgesamt 3000 g 10 %-iger wäßriger Schwefelsäure und anschließend zweimal mit insgesamt 3000 g Wasser wäscht. Nach destillativer Entfernung des Toluols verbleiben 1240 g eines Öles,

welches zu 96 % (entsprechend 3,6 Mol) aus dem S-Enantiomeren des 2-Tosyloxypropionsäure-(trimethylsilyl)-methylesters besteht. Die erzielte Ausbeute beträgt demnach 90 % der Theorie, bezogen auf den eingesetzten S-2-Hydroxypropionsäure-(trimethylsilyl)-methylester. Aus dem Gehalt des R-Enantiomeren der Verbindung (IV) von 1 % im Reaktionsprodukt errechnet sich ein S/R-Verhältnis von 99 : 1.

b) 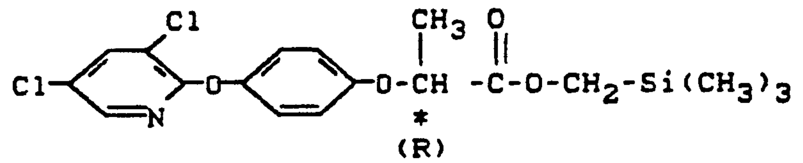 (IV-1)

Eine Suspension von 930 g (3,45 Mol) 4-(3,5-Dichlorpyridyl-2-oxy)-phenol, 1115 g (3,24 Mol) 2-Tosyloxypropionsäure-(trimethylsilyl)-methylester (Gehalt: 99 % S-Enantiomeres, 1 % R-Enantiomeres) und 925 g Kaliumcarbonat in 5100 g Acetonitril wird unter Rückfluß erhitzt und 15 Stunden unter Rückfluß nachgerührt. Nach dem Abkühlen auf Raumtemperatur wird das Reaktionsgemisch filtriert. Das Filtrat wird anschließend destillativ von Acetonitril befreit. Das so erhaltene flüssige Rohprodukt wird mit 3500 g Toluol verdünnt, zweimal mit insgesamt 1500 g 5 %-iger wäßriger Natronlauge, einmal mit 1000 g 1 %-iger wäßriger Schwefelsäure, und einmal mit 500 g Wasser gewaschen. Nach destillativer Entfernung des Toluols verbleiben 1360 g eines hellen Öles, welches zu 85,7 % (2,81 Mol) aus dem R-Enantiomeren des 2-[4-(3,5-Dichlorpyridyl-2-oxy)-phenoxy]-propionsäure-(trimethylsilyl)-methylesters (IV-1) und zu 7,5 % aus dem S-Enantiomeren der Verbindung (IV-1) besteht. Das R/S-Verhältnis beträgt 92 : 8 und die Ausbeute 86,8 % der Theorie, bezogen auf eingesetzten S-2-Tosyloxypropionsäure-(trimethylsilyl)-methylester.

Vergleichsbeispiel

Herstellung des R-Enantiomeren des 2-[4-(3,5-Dichlorpyridyl-2-oxy)-phenoxy]-propionsäure-(trimethylsilyl)-methylesters nach bekannten Verfahren;

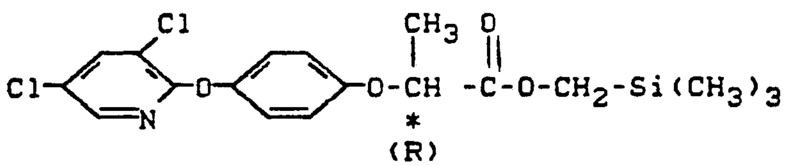 (IV-1)

Eine Lösung von 8,2 g (0,025 Mol) 2-[4-(3,5-Dichlorpyridyl-2-oxy)-phenoxy]-propionsäure in 50 ml Aceton wurde bei 20°C unter Führen mit 4,9 g (0,03 Mol) 1,8-Diaza-bicyclo-[5,4,0]undec-7-en versetzt. Das Reaktionsgemisch wurde 30 Minuten bei Raumtemperatur gerührt und dann ebenfalls bei Raumtemperatur mit 3,7 g (0,03 Mol) Chlormethyltrimethylsilan versetzt. Man kochte 23 Stunden unter Rückfluß, versetzte nochmals mit 0,5 g 1,8-Diaza-bocyclo-[5,4,0]undec-7-en und 0,8 g Chlormethyltrimethylsilan, kochte erneut 23 Stunden unter Rückfluß, ließ dann abkühlen und zog das Lösungsmittel unter vermindertem Druck ab. Der verbleibende Rückstand wurde in Methylenchlorid gelöst, und die entstehende organische Phase wurde nacheinander mit wäßriger Natronlauge, verdünnter wäßriger Salzsäure und mit Wasser gewaschen und nach dem Trocknen eingeengt. Der verbleibende Rückstand wurde durch kurzzeitiges Erhitzen auf 80°C (Badtemperatur) bei einem Druck von 2 mbar von Resten an flüchtigen Anteilen befreit. Man erhielt auf diese Weise 2,5 g (24,2 % der Theorie) an dem R-Enantiomeren des 2-[4-(3,5-Dichlor-pyridyl-2-oxy)-phen-oxy]-propionsäure-(trimethylsilyl)-methylesters.

Brechungsindex: $n_D^{23,5} = 1,5433$.

Drehwert: $[\alpha]_D^{24} = +15,4°$

(1-molare Lösung in Chloroform: Kuvettenlänge 10 cm).

**Patentansprüche**

1. Verfahren zur Herstellung von Milchsäuresilylestern der Formel

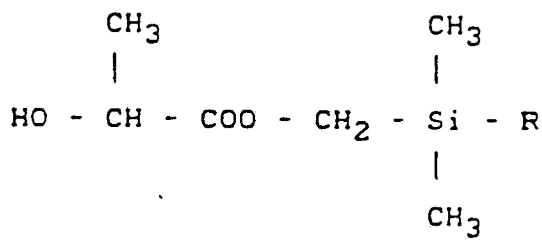

(I)

in welcher
R für Alkyl oder Aryl steht,

dadurch gekennzeichnet, daß man Milchsäure der Formel

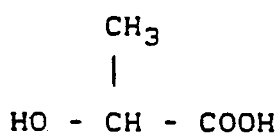

(II)

mit Chlormethylsilanen der Formel

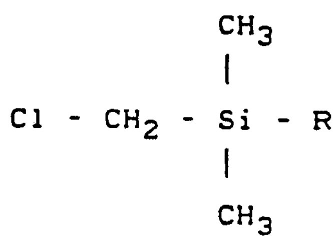

(III)

in welcher
R die oben angegebene Bedeutung hat,

in Gegenwart eines tertiären Amins sowie gegebenenfalls in Gegenwart eines zusätzlichen Verdünnungsmittels bei Temperaturen zwischen 50 und 120° C umsetzt.

2. Verfahren gemäß Anspruch 1, dadurch gekennzeichnet, daß man als Ausgangsstoff das S-Enantiomere der Milchsäure einsetzt.

3. Verfahren gemäß Anspruch 1, dadurch gekennzeichnet, daß man als Ausgangsstoffe Chlormethylsilane der Formel (III) einsetzt, in welcher
R für Alkyl mit 1 bis 4 oder 12 Kohlenstoffatomen oder für Phenyl steht.

4. Verfahren gemäß Anspruch 1, dadurch gekennzeichnet, daß man N,N-Dimethylcyclohexylamin als tertiäres Amin einsetzt.

5. Verfahren gemäß Anspruch 1, dadurch gekennzeichnet, daß man die Umsetzung bei Temperaturen zwischen 60° C und 110° C durchführt.

6. Verfahren gemäß Anspruch 1, dadurch gekennzeichnet, daß man auf 1 Mol an Milchsäure der Formel (II) 1 bis 4 Mol an Chlormethylsilan der Formel (III) sowie 1 bis 3 Mol an tertiärem Amin einsetzt.

7. Milchsäuresilylester der Formel

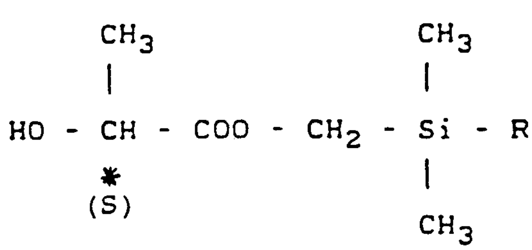

(I)

in welcher
R für Alkyl mit 1 bis 4 oder 12 Kohlenstoffatomen oder für Phenyl steht.

8. Milchsäuresilylester der Formel

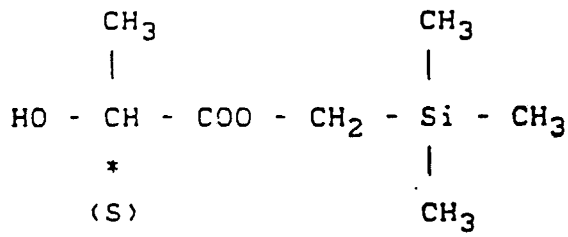

9. Verfahren zur Herstellung von R-Enantiomeren der Phenoxypropionsäure-Derivate der Formel

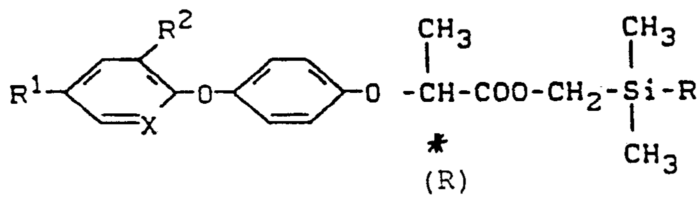 (IV)

in welcher

R für Alkyl mit 1 bis 4 oder 12 Kohlenstoffatomen oder für Phenyl steht,
$R^1$ für Chlor oder Trifluormethyl steht,
$R^2$ für Wasserstoff oder Chlor steht und
X für Stickstoff, eine CH-Gruppe oder eine C-Cl-Gruppe steht,

dadurch gekennzeichnet, daß man in einer ersten Stufe die gemäß den Ansprüchen 1 bis 6 erhaltenen Milchsäuresilylester der Formel

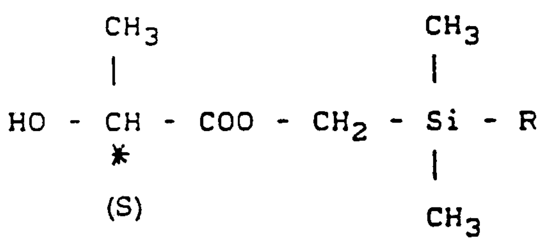 (Ia)

in welcher

R die oben angegebene Bedeutung hat, mit Tosylchlorid in Gegenwart eines Säurebindemittels und gegebenenfalls in Gegenwart eines zusätzlichen Verdünnungsmittels bei Temperaturen zwischen 0°C und 20°C umsetzt und in einer zweiten Stufe die dabei entstehenden 2-Tosyloxy-propionsäure-(silylmethyl)-ester der Formel

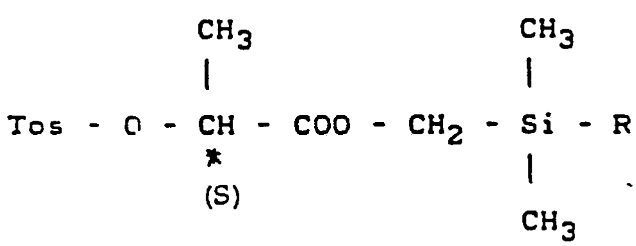 (V)

in welcher

R die oben angegebene Bedeutung hat und Tos für Tosyl steht,

mit Phenol-Derivaten der Formel

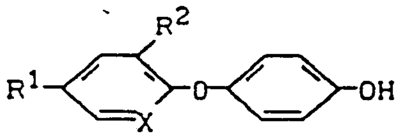

(VI)

in welcher

$R^1$, $R^2$ und X die oben angegebene Bedeutung haben.

in Gegenwart eines Säurebindemittels und in Gegenwart eines Verdünnungsmittels bei Temperaturen zwischen 50° C und 120° C umsetzt.

**Claims**

1. Process for the preparation of silyl lactates of the formula

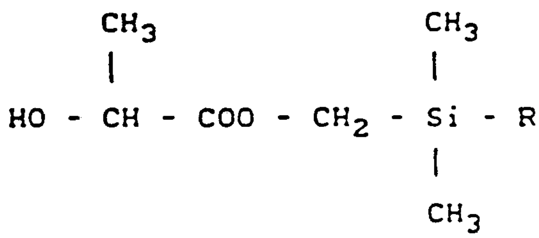

(I)

in which

R represents alkyl or aryl, characterised in that lactic acid of the formula

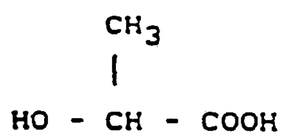

(II)

is reacted with chloromethylsilanes of the formula

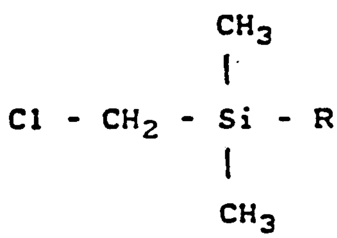

(III)

in which

R has the abovementioned meaning,
in the presence of a tertiary amine and, if appropriate, in the presence of an additional diluent, at temperatures between 50 and 120° C.

2. Process according to Claim 1, characterised in that the S-enantiomer of lactic acid is employed as the starting material.

3. Process according to Claim 1, characterised in that chloromethylsilanes of the formula (III) in which
R represents alkyl with 1 to 4 or 12 carbon atoms, or represents phenyl
are employed as starting materials.

4. Process according to Claim 1, characterised in that N,N-dimethylcyclohexylamine is employed as the tertiary amine.

5. Process according to Claim 1, characterised in that the reaction is carried out at temperatures between 60° C and 110° C.

6. Process according to Claim 1, characterised in that 1 to 4 moles of chloromethylsilane of the formula (III) and 1 to 3 moles of tertiary amine are employed per mole of lactic acid of the formula (II).

7. Silyl lactates of the formula

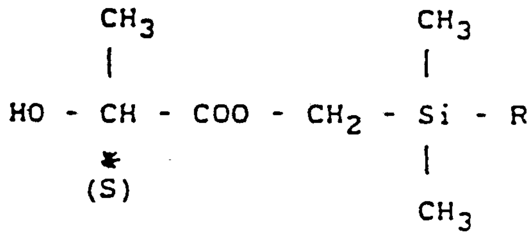

(I)

in which

R represents alkyl with 1 to 4 or 12 carbon atoms, or represents phenyl.

8. Silyl lactate of the formula

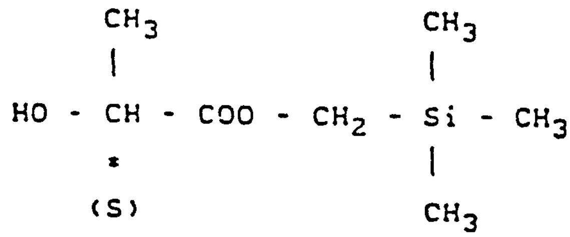

9. Process for the preparation of R-enantiomers of phenoxypropionic acid derivatives of the formula

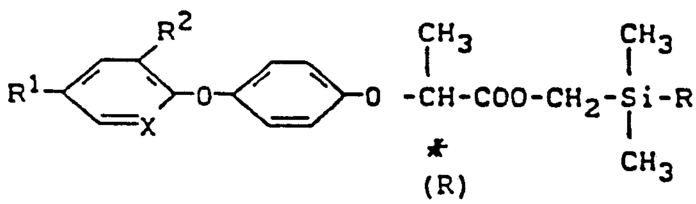

(IV)

in which

R represents alkyl with 1 to 4 or 12 carbon atoms, or represents phenyl

$R^1$ represents chlorine or trifluoromethyl,

$R^2$ represents hydrogen or chlorine and

X represents nitrogen, a CH group or a C-Cl group,

characterised in that, in a first stage, the silyl lactates obtained according to Claims 1 to 6, of the formula

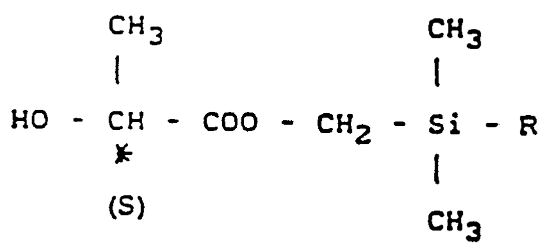

(Ia)

in which

R has the above-mentioned meaning are reacted with tosyl chloride in the presence of an acid acceptor and, if appropriate, in the presence of an additional diluent, at temperatures between 0°C and 20°C, and, in a second stage, the resulting silyl-methyl 2-tosyloxypropionates of the formula

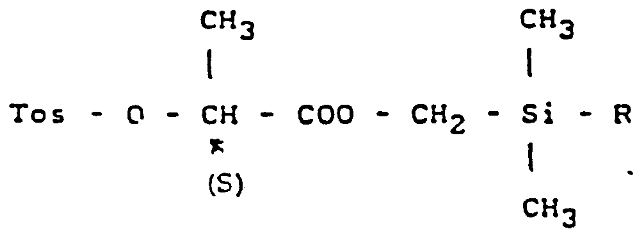

(V)

in which

R has the above-mentioned meaning and
Tos represents tosyl
are reacted with phenol derivatives of the formula

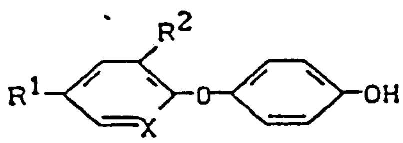

(VI)

in which

$R^1$, $R^2$ and X have the above-mentioned meaning, in the presence of an acid acceptor and in the presence of a diluent, at temperatures between 50° C and 120° C.

**Revendications**

1. Procédé de fabrication d'esters silyliques d'acide lactique de formule:

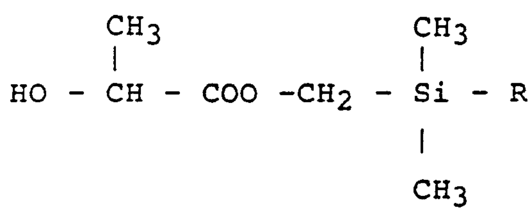

(I)

dans laquelle

R représente un alcoyle ou aryle,
caractérisé en ce qu'on fait réagir de l'acide lactique de formule:

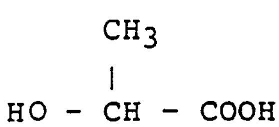

(II)

avec des chlorométhylsilanes de formule:

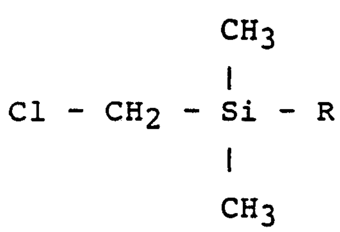

(III)

dans laquelle

R a la signification indiquée plus haut, en présence d'une amine tertiaire de même qu'éventuellement en présence d'un diluant additionnel à des températures entre 50 et 120° C.

2. Procédé selon la revendication 1, caractérisé en ce qu'on utilise comme matière première le S-énantiomère d'acide lactique.

3. Procédé selon la revendication 1, caractérisé en ce qu'on utilise comme matières premières des chlorométhylsilanes de formule (III) dans laquelle

R représente un alcoyle ayant 1 à 4 ou 12 atomes de carbone ou un phényle.

4. Procédé selon la revendication 1, caractérisé en ce qu'on utilise de la N,N-diméthylcyclohexylamine comme amine tertiaire.

5. Procédé selon la revendication 1, caractérisé en ce qu'on exécute la réaction à des températures entre 60° C et 110° C.

6. Procédé selon la revendication 1, caractérisé en ce que pour 1 mole d'acide lactique de formule (II) on utilise 1 à 4 moles de chlorométhylsilane de formule (III) de même que 1 à 3 moles d'amine tertiaire.

7. Ester silylique d'acide lactique de formule:

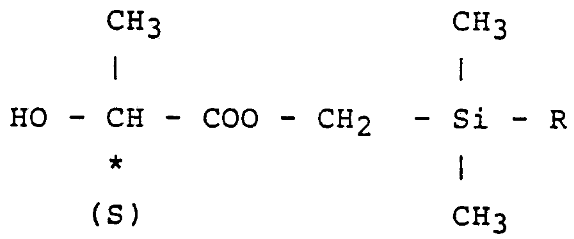

(I)

dans laquelle

R représente un alcoyle ayant 1 à 4 ou 12 atomes de carbone ou un phényle.

8. Ester silylique d'acide lactique de formule:

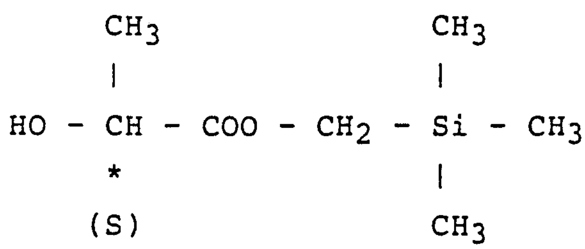

9. Procédé de fabrication de R-énantiomères de dérivés d'acide phénoxypropionique de formule:

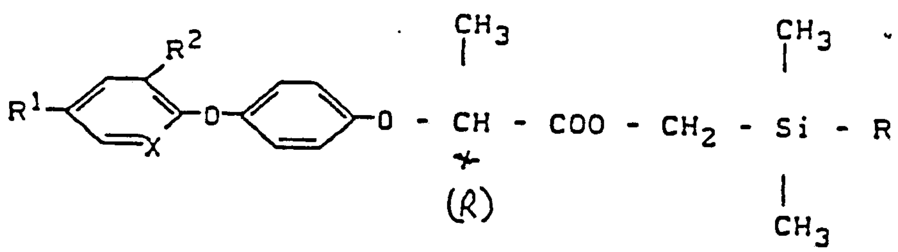

(IV)

dans laquelle

R représente un alcoyle ayant 1 à 4 ou 12 atomes de carbone ou un phényle,

$R^1$ du chlore ou un trifluorométhyle;

$R^2$ de l'hydrogène ou du chlore et

X de l'azote, un groupe CH ou un groupe C-Cl,

caractérisé en ce que dans un premier stade on fait réagir les esters silyliques d'acide lactique obtenus selon les revendications 1 à 6, de formule:

```
     CH3             CH3
     |               |
HO - CH - COO - CH2 - Si - R          (Ia)
     *               |
    (S)              CH3
```

dans laquelle

R a la signification indiquée plus haut, avec du chlorure de tosyle en présence d'un agent fixateur d'acide et éventuellement en présence d'un diluant additionnel à des températures entre 0° C et 20° C, et en ce que dans un <u>deuxième</u> stade on fait réagir les esters de (silyl-méthyle) d'acide 2-tosyloxy-propionique ainsi obtenus, de formule:

```
          CH3             CH3
          |               |
Tos - O - CH - COO - CH2 - Si - R          (V)
          *               |
         (S)              CH3
```

dans laquelle

R a la signification indiquée plus haut et
Tos signifie un tosyle,
avec des dérivés phénoliques de formule:

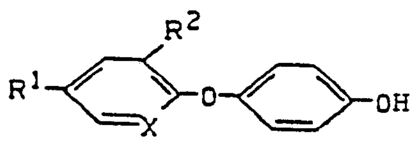

dans laquelle

$R^1$ $R^2$ et X ont la signification indiquée plus haut, en présence d'un agent fixateur d'acide et en présence d'un diluant à des températures entre 50° C et 120° C.